# EUROPEAN PATENT APPLICATION

(11) **EP 3 540 899 A1**
(43) Date of publication of application: **18.09.2019**
(21) Application number: 18162371.1
(22) Date of filing: 16.03.2018
(51) Int. Cl.: H02J 7/00, H02J 50/10, B60L 5/00

(54) **DEVICES AND METHODS FOR EMERGENCY CHARGING IN VEHICLES**

(71) Applicant: Vestel Elektronik Sanayi ve Ticaret A.S., 45030 Manisa (TR); Ozyegin Universitesi, 34794 Istanbul (TR)
(72) Inventor: GULBAHAR, Burhan, 45030 Manisa (TR); MEMISOGLU, Gorkem, 45030 Manisa (TR)
(74) Representative: Flint, Adam

(57) **Abstract**

Emergency charging of a vehicle (10) is achieved by providing at least one remote charging station (20) with an elongated space and generating within the elongated space a magnetic field that varies along a longitudinal direction of the elongated space. Furthermore, the vehicle (10) is provided with an inductive energy harvester (62) and a battery (64) of the vehicle (10) is charged with electric energy generated by the energy harvester (62) by moving the vehicle (10) through the elongated space. An emergency caching operation may be initiated to copy (54) data and/or tasks into a predetermined emergency memory (66) during or after the charging operation.

## Description

### Field

The present application relates to devices and methods for harvesting energy in vehicles - such as but not limited to - unmanned aerial vehicles (UAVs, such as drones), autonomous vehicles, or electric vehicles, e.g., for purposes of autonomous charging and/or emergency caching.

### Background

A UAV is defined as a "powered, aerial vehicle that does not carry a human operator, uses aerodynamic forces to provide vehicle lift, can fly autonomously or be piloted remotely, can be expendable or recoverable, and can carry a lethal or nonlethal payload". The term "drone", more widely used by the public, was coined in reference to early remotely-flown target aircrafts used for practice firing of a battleship's guns.

In the following, the term UAV is intended to cover all types of unmanned aircraft systems.

UAVs are primarily used for surveillance and reconnaissance. However, they can be designed to perform other tasks as well. One limitation of currently available mini UAVs is their endurance or maximum flight time. Mini UAVs are small and lightweight. Therefore, they cannot carry large fuel payloads. Specifically, in electric powered mini UAVs, the rechargeable batteries used to power the aircraft often compose a large amount of the overall aircraft mass, so increasing the battery size to improve endurance is not practical.

However, UAVs may need to travel long journeys while carrying information in their hardware memory, for making computations or sending messages to some base stations. As a result, such UAVs frequently run out of power especially in the middle of very important tasks such as waiting or sending some message, making some important distributed computations or carrying an object. On the other hand, taking off the drone, finding a charging station at the ground, and recharging and restarting the operating system, and continuing the task often takes too much time. Moreover, some emergency tasks can be necessary including calling for help, transferring data to a safe place at a station before getting totally out of power or processing some messages or critical data.

The DE102013004881A1 describes a device for landing and wireless charging of UAVs, which comprises a landing and loading platform attached to a battery magazine, by which a battery rechargeable after a flight mission of a small aircraft is replaced by an unused new battery. A charging device is provided for recharging the rechargeable battery after the flight mission of the small aircraft.

Furthermore, the KR101 564254B1 discloses a wireless charging system comprising a plurality of wireless charging stations which are configured to include a charging pad on which a UAV can land to initiate charging of its battery. When the charge level of the UAV is less than a reference value, a location information of a suitable wireless charging station (e.g. closest to the flight path) is provided to the UAV.

Additionally, Steven R. Anton et al.: "Vibration energy harvesting for unmanned aerial vehicles", Proceedings of SPIE - The International Society for Optical Engineering . May 2008, discloses a concept of vibration and solar energy harvesting using smart materials to improve the endurance of UAVs without adding a significant amount of weight. It is proposed that piezoelectric vibration harvesters and photovoltaic solar harvesters be incorporated into the design of the aircraft in order to actively harvest vibration and solar energy. Based on flight tests that have been performed, it could be concluded that both the piezoelectric and solar energy harvesting devices have the capability of charging energy storage devices. Taking into consideration the total area of the harvesting devices, the volumetric energy harvested during flight can be calculated as 0.011 J/cm3 for the piezoelectric patches and 32.0 J/cm3 for the solar panels. However, the solar panels will only harvest energy when exposed to light and the piezoelectric patches require a considerable amount of total area, so that these energy harvesting approaches are not feasible for small UAVs with little or no wing area and little vibrations.

### Summary

According to a first aspect disclosed herein, there is provided a method for emergency charging of a vehicle, the method comprising:
charging a battery of the vehicle by passing the vehicle through a magnetic field that varies along a longitudinal direction of an elongated space, the vehicle comprising an inductive energy harvester which generates electric energy which charges the battery as the vehicle moves through the magnetic field in the longitudinal direction at least partly under the influence of gravity.

In an example, the longitudinal direction may comprise a vertical component and the vehicle is moved by gravitational force during the charging step. In a more specific example, the longitudinal direction may correspond to a vertical direction and the vehicle may be dropped into the elongated space so as to be moved in a free-fall manner during the charging step.

In an example, the movement of the vehicle may be smoothly decelerated by providing at least one energy absorber element at the end of the elongated space.

In an example, an additional emergency caching operation for copying data and/or tasks into a predetermined emergency memory may be initiated during or after the charging.

According to a second aspect disclosed herein, there is provided an arrangement for emergency charging of a vehicle, the arrangement comprising:
a charging station with an elongated space; and
a plurality of magnetic elements for generating within the elongated space a magnetic field with a transversal component that varies along a longitudinal direction of the elongated space;
wherein the charging post is adapted to allow a vehicle to enter and move through the elongated space in the longitudinal direction.

In an example, the charging station may be shaped as a hollow tube which includes the elongated space inside. In a more specific example, the plurality of magnetic elements may be arranged along an inner wall of the hollow tube.

In an example, the elongated space may be arranged at an outer surface of the charging station. In a more specific example, the plurality of magnetic elements may be arranged along an outer wall of the charging station.

In an example, at least one energy absorber element may be arranged at the end of the elongated space.

According to a third aspect disclosed herein, there is provided a device for emergency charging of a vehicle, the device comprising:
an inductive energy harvester; and
an emergency battery adapted to be charged with electric energy generated by the energy harvester when the vehicle is moved through a magnetic field that varies along a moving direction of the vehicle.

In an example, the energy harvester may comprise at least one inductive coil.

In an example, the vehicle may be a ring-shaped vehicle and the inductive coil may be arranged at a circumference of a through hole of the ring-shaped vehicle.

In an example, a control unit may be provided for copying data or tasks to an emergency storage by using energy of the emergency battery.

According to a fourth aspect disclosed herein, there is provided a method of caching data or tasks during an emergency charging of a vehicle, wherein the method comprises:
charging an emergency battery with electric energy generated by an inductive energy harvester when the vehicle is moved through a magnetic field that varies along a moving direction of the vehicle; and
copying the data or tasks to an emergency storage by using energy of the emergency battery.

According to a fifth aspect disclosed herein, there is provided a computer program product comprising program code for producing the steps of the method of the fourth aspect when run on a computer device.

Accordingly, with the above first to fifth aspects, important information (e.g. data or tasks) can be copied or self-replicated in a secure emergency memory of the vehicle during or after an emergency charging in a charging station by utilizing a small amount of energy obtained from gravitational or motion energy. E.g., a relatively high altitude or speed of a vehicle can be utilized by a magnet-based charging station with elongated space for emergency charging of vehicles travelling long distances and far-away destinations.

It is noted that the above devices may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

The methods can be implemented as program code of a computer program which may be stored and/or distributed on a suitable medium, such as an optical storage medium or a solid-state medium, supplied together with or as part of other hardware, but may also be distributed in other forms, such as via the Internet or other wired or wireless telecommunication systems.

### Brief Description of the Drawings

To assist understanding of the present disclosure and to show how embodiments may be put into effect, reference is made by way of example to the accompanying drawings in which:
Figure 1 shows schematically a cross-sectional side view of an example of an arrangement for harvesting energy in a UAV by guiding it through an elongated space with changing magnetic field;
Figure 2 shows a schematic block diagram of an example of an emergency caching device;
Figure 3 shows schematically a top view of a ring-shaped UAV with inductive coil as an example of an energy harvester; and,
Figure 4 shows schematically a perspective view of an example of a cylindrical charging station for charging a ring-shaped UAV.

### Detailed Description

Real time and instantaneous power can be obtained with inductive energy harvesters (e.g. coils) where the energy is obtained due to instantaneous change of magnetic flux through the inductive energy harvesters, i.e., passing through a static magnet with a high velocity. To obtain sufficient changes of flux in a fast manner, and without consuming any electrical power, the gravitational force of a falling or downwards rolling vehicle can be exploited.

In the following, examples of charging stations, energy harvesters and emergency caching arrangements are described on the basis of substantially circular UAVs with rotor drives. It is however mentioned that the principles underlying the invention can also be implemented for other types of vehicles with other shapes.

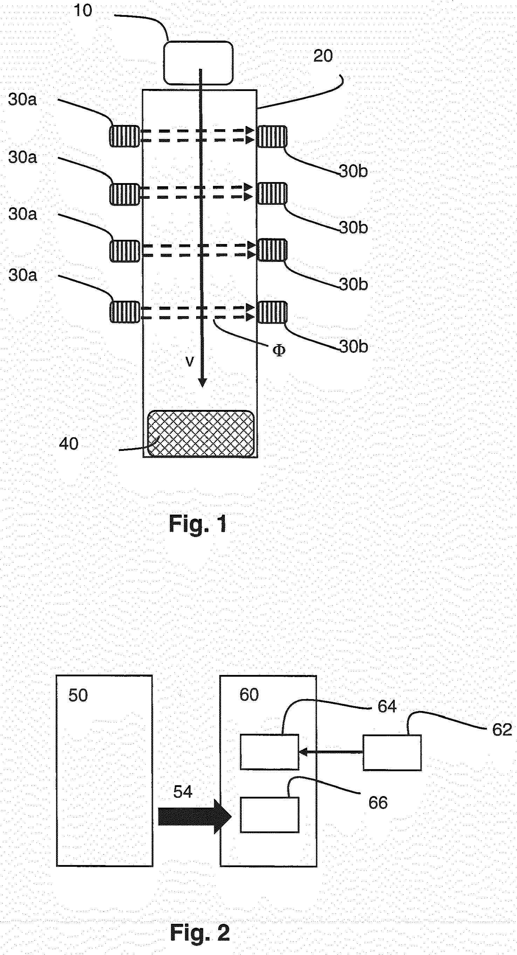

Figure 1 shows schematically a cross-sectional side view of an example of a tube-shaped charging station 20 which is enclosed by or incorporates in its walls permanent or electric magnets 30a, 30b for providing an elongated space with changing magnetic field or flux Φ that can be used for harvesting energy in a UAV (e.g. drone) 10 by guiding it through the elongated space with changing magnetic field.

In the following examples, the UAV 10 is dropped from the sky into the tube-shaped charging station 20.

Such tube-shaped charging stations 20 can be placed at specific points along roads or flight paths of the UAVs 10 as emergency and charging facilities. When the UAV 10 is subjected to a free fall from a very high altitude, the velocity v of the UAV 10 reaches very high values creating a high amount of current in an emergency coil of an inductive energy harvester provided at or in the UAV 10.

Such inductive magnetic harvesters can vary depending on whether the coils of the magnetic harvester contain a ferrite core inside or not. An inductive magnetic harvesting structure typically consists of magnets, coils, and a moving mechanical structure. Air-cored magnetic harvesters do not contain high permeability cores in the coils. In order to achieve maximum flux variation, the magnets 30a, 30b of the charging stations should be placed in or close to the coil windings. Ferrite-cored energy harvesters contain high permeability cores in their coils and the permanent magnets can be placed outside the coils. The permeability of the magnetic core material can be as high as 1000 times more than the air, so it can reduce the magnetic reluctance of the magnetic path and enhance the induced voltage.

Both approaches, though, share the same working principle and follow Faraday's Law of electromagnetism. They share similar equivalent models, in spite of different magnetic reluctance generated from different permeability materials in the magnetic circuit. The inductive harvester provided at or in the UAV 10 utilizes the relative movement of the UAV 10 with respect to the permanent magnets 30a, 30b to generate a varying magnetic field which induces an electromagnetic force in the coil(s) of the inductive energy harvester. The magnets 30a, 30b can be placed to have opposite polarities of magnetization from each other, where the left magnets 30a of Figure 1 may correspond to magnetic north poles and the right magnets 30b of Figure 1 may correspond to magnetic south poles. Thus, when the UAV 10 moves along the magnets 30a and 30b during its free-fall motion, a varying magnetic field is created, which increases and decreases along the movement direction of the UAV 10.

Then, when the UAV 10 has reached the end (bottom) of the elongated space within the tube-shaped charging station 20, it drops onto at least one energy absorbing element (40) (which may be a elastically or non-elastically deforming smoothing structure such as a coil or cushion or other damping element), so that the UAV 10 will not be damaged and its velocity will be slowed down until the UAV 10 either stays at a stable condition without any remaining charge (after having used the harvested energy for performing emergency tasks) or, if enough charge is obtained, it can fly again with refreshed battery. The length of the elongated space of the charging station can reach hundreds of meters, for example.

In addition, the tube-shaped charging station 20 may include secure memory elements to which the UAV 10 can transfer critical information before running out of power. In addition, the charging station 20 can include some secure place or locked box where an object carried by the UAV 10 can be dropped before the UAV 10 runs out of power.

Figure 2 shows a schematic block diagram of an example of an emergency caching device 60 which can be attached to the original electronic board which comprises a controller or computing device 50 of the UAV for controlling replication and copying of important tasks and/or data from the original board (e.g. printed circuit board (PCB)). Thereby, some important information to send can be cached before the UAV runs out of power. The copying operation is indicated by a bold arrow 54 in Figure 2. The battery source of the original board may also include a real-time energy feeding line (not shown) such that if there is enough current in the line this current can be utilized to perform some computational or communication tasks. The PCB and the battery units are designed in this manner easily.

The emergency caching device 60 includes an emergency battery 64 which is connected to an inductive energy harvester 62 (as described above) provided at a suitable place at or in the UAV 10. The voltage or current induced in the coil(s) of the inductive energy harvester through the electromagnetic force is used for charging the emergency battery 64 during the movement of the UAV through the charging station. During or after charging, the energy of the emergency battery 64 is used to initiate the emergency caching operation under control of the computing device 50 so as to copy important data and/or tasks from the original board to an emergency memory 66 of the emergency caching device 60.

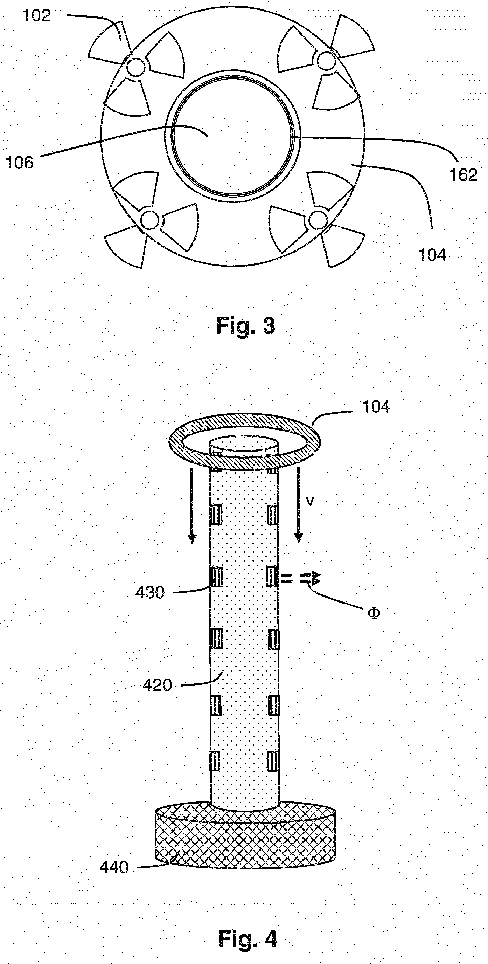

Figure 3 shows schematically a top view of a ring-shaped UAV 104 with inductive coil(s) 162 as an example of an energy harvester.

The ring-shaped UAV 10 is driven by four rotor drives with rotor blades 102 and has a shape that forms a through hole 106 at which out circumference the inductive coil(s) 162 is arranged, so that the ring-shaped UAV 10 can be dropped over a cylindrical pole of a charging station. Thereby, a movement-based inductive emergency charging operation can be achieved, similar to the example of Figure 1.

Figure 4 shows schematically a perspective view of an example of a cylindrical charging station 420 for charging the ring-shaped UAV 104 of Figure 3. In this example, the elongated space with the varying magnetic field or flux Φ is generated by permanent or electric magnets 430 mounted at or integrated into the outer surface of the cylindrical pole of the charging station 420. When the ring-shaped UAV 104 is stopped over the charging station 420 and then dropped in a manner that the cylindrical pole of the charging station 420 enters the through hole 106 of the ring-shaped UAV 104, the inductive coil(s) 162 surround the cylindrical pole and pass the magnets 430 during a controlled free-fall movement along the cylindrical pole.

Similar to the example of Figure 1, at least one energy absorbing element 440 may be provided at the bottom of the charging station to prevent any damage of the ring-shaped UAV 104 after the charging and/or emergency caching operation.

To summarize, emergency charging of a vehicle is achieved by providing at least one remote charging station with an elongated space and generating within the elongated space a magnetic field that varies along a longitudinal direction of the elongated space. Furthermore, the vehicle is provided with an inductive energy harvester and a battery of the vehicle is charged with electric energy generated by the energy harvester by moving the vehicle through the elongated space. An emergency caching operation may be initiated to copy data and/or tasks into a predetermined emergency memory during or after the charging operation.

It is noted that the above examples are not intended to limit the scope of the invention. As already indicated above, the invention can be applied to any kind of moveable vehicle in the air, on the ground or on/in the water. The movement required for the charging process may as well be generated by gravitation force on an inclined slope or by inertial force when a motor is stopped and the vehicle continues its movement. As a consequence, it is not necessary that the elongated space with the varying magnetic field is oriented in the vertical direction.

Although at least some aspects of the examples described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method for emergency charging of a vehicle (10), the method comprising:
charging a battery (64) of the vehicle (10) by passing the vehicle (10) through a magnetic field that varies along a longitudinal direction of an elongated space, the vehicle (10) comprising an inductive energy harvester (62) which generates electric energy which charges the battery (64) as the vehicle moves through the magnetic field in the longitudinal direction at least partly under the influence of gravity.

2. The method according to claim 1, wherein the longitudinal direction comprises a vertical component and the vehicle (10) is moved by gravitational force during the charging step.

3. The method according to claim 2, wherein the longitudinal direction corresponds to a vertical direction and the vehicle (10) is dropped into the elongated space so as to be moved in a free-fall manner during the charging step.

4. The method according to any of claims 1 to 3, further comprising the step of smoothly decelerating the movement of the vehicle (10) by providing at least one energy absorber element (40) at the end of the elongated space.

5. The method according to any of claims 1 to 4, further comprising the step of initiating an emergency caching operation for copying (54) data and/or tasks into a predetermined emergency memory (66) during or after the charging step.

6. An arrangement for emergency charging of a vehicle (10), the arrangement comprising:
a charging station (20) with an elongated space; and
a plurality of magnetic elements (30a, 30b) for generating within the elongated space a magnetic field with a transversal component that varies along a longitudinal direction of the elongated space;
wherein the charging station (20) is adapted to allow a vehicle (10) to enter and move through the elongated space in the longitudinal direction.

7. The device according to claim 6, wherein the charging station (20) is shaped as a hollow tube which includes the elongated space inside.

8. The device according to claim 7, wherein the plurality of magnetic elements (30a, 30b) are arranged along an inner wall of the hollow tube.

9. The device according to claim 6, wherein the elongated space is arranged at the outer surface of the charging station (20).

10. The device according to claim 9, wherein the plurality of magnetic elements (430) are arranged along an outer wall of the charging station (20).

11. The device according to any of claims 6 to 10, further comprising at least one energy absorber element (40) arranged at the end of the elongated space.

12. A device for emergency charging of a vehicle (10), the device comprising:
an inductive energy harvester (62); and
an emergency battery (64) adapted to be charged with electric energy generated by the energy harvester (62) when the vehicle (10) is moved through a magnetic field that varies along a moving direction of the vehicle (10).

13. The device according to claim 12, wherein the vehicle is a ring-shaped vehicle (104) and wherein the inductive coil (162) is arranged at a circumference of a through hole (106) of the ring-shaped vehicle (104).

14. The device according to claim 12 or claim 13, further comprising a control unit (50) for copying (54) data or tasks to an emergency memory (66) by using energy of the emergency battery (64).

15. A method of caching data or tasks during an emergency charging of a vehicle (10), wherein the method comprises:
charging an emergency battery (64) with electric energy generated by an inductive energy harvester (62) when the vehicle (10) is moved through a magnetic field that varies along a moving direction of the vehicle (10); and
copying (54) the data or tasks to an emergency memory (66) by using energy of the emergency battery (64).
